# EUROPEAN PATENT SPECIFICATION

(11) **EP 3 111 722 B1**
(45) Date of publication and mention of the grant of the patent: **15.01.2020**
(21) Application number: 14706860.5
(22) Date of filing: 27.02.2014
(51) Int. Cl.: H05B 6/06, H05B 6/12

(54) **INDUCTION COOKER HALF-BRIDGE RESONANT INVERTER HAVING AN ADAPTOR COIL**
INDUKTIONSKOCHER-HALBBRÜCKENRESONANZWECHSELRICHTER MIT EINER ADAPTERSPULE
ONDULEUR RÉSONANT EN DEMI-PONT DE CUISEUR À INDUCTION DOTÉ D'UNE BOBINE D'ADAPTATEUR

(43) Date of publication of application: 04.01.2017
(73) Proprietor: Arçelik Anonim Sirketi, 34445 Istanbul (TR)
(72) Inventor: YILMAZ, Namik, 34950 Istanbul (TR)
(86) International application number: PCT/EP2014/053851
(87) International publication number: WO 2015/127974

(56) References cited:
- EP-A1- 2 408 261
- DE-A1-102006 005 813
- DE-A1-102010 020 189

## Description

The present invention relates to an improved induction cooker half-bridge resonant inverter having an adaptor coil in order for heating ferromagnetic as well as non-ferromagnetic cookware.

It is well-known that an induction heating cooker operates based on the process of heating a ferromagnetic material by electromagnetic induction where eddy currents are to be induced and resistance provides heat dissipation within said ferromagnetic material, i.e. a cooking vessel in the form of a pot or pan.

By induction heating, high-frequency alternating current is passed through a coil upon which a magnetic field of the same frequency is induced. The internal resistance of the pan causes heat dissipation due to Joule effect and energy transfer is interrupted once the pan is removed from the cooktop. The energy efficiency of induction heating cookers is considerably high since there is no transfer of heat energy between the hob and the cookware and heat energy lost in the air is minimal.

A resonant converter in an induction heater circuit topology typically consists of a capacitor, an inductor and resistance. To this end, when power is supplied to the resonant tank, electric energy is stored in the inductor and transferred to the capacitor. Resonance therefore occurs while the inductor and the capacitor involve in energy exchange. The resonant converter can be a half-bridge resonant converter or a quasi-resonant converter.

Induction cooking systems operate with cooking vessels made from ferromagnetic materials having a high resistivity and relative permeability. It is known that it is difficult to heat non-ferromagnetic vessels such as aluminum pans due to low resistivity and relative permeability On the other hand, it is to be noted that such vessels are extensively used domestically.

In case a high permeability material pan is used, the skin depth is low and the skin effect is large, meaning that a high resistance is in question. On the other hand, if the pan is made of a non-ferromagnetic material, its specific permeability is low and skin depth is large. As the thickness of an actual pan is small, the resistivity value is more decisive. The resistance of the cooking vessel increases with the resistivity value, and the input impedance of the induction heating coil increases.

The input impedance of the induction heating coil can be increased by increasing the number of turns thereof, upon which the resonant frequency is lowered, in which case the skin resistance and the skin depth of the cooking vessel deteriorates. Likewise, to increase the skin resistance of non-ferromagnetic materials, an increased resonant frequency can be used, in which case the efficiency of the induction cooking system will be very low due to the losses in the induction heating coil. The present invention therefore provides an induction cooking system capable of heating ferromagnetic as well as non-ferromagnetic cookware, by which the above discussed drawbacks are eliminated.

Among others, a prior art publication in the technical field of the invention may be referred to as JP2007073400, which discloses a driving method to realize induction heating using a high frequency eddy current in a material not suitable for induction heating, such as aluminum, non-magnetic stainless steel and copper. In this regard, two coils are arranged near a metal load to be heated and currents of different phases are supplied to each of them so that the induced eddy current frequency is enhanced while the frequency of a heating coil is kept low. When the phase difference of the currents applied to the two coils is set 180 degrees, the induced eddy current frequency becomes twice of the current frequency applied to the heating coil.

Prior art document DE 10 2006 005 813 A1 discloses an induction heating cooker comprising a resonant circuit with an induction heating coil and a first set of capacitors. A second set of capacitors can optionally be coupled in parallel to the first set in order to adapt the resonance frequency to a ferromagnetic or a non-ferromagnetic cooking device, respectively.

Prior art document DE 10 2010 020 189 A1 discloses an adapter having a lower side to be positioned on an induction heating cooker and an upper side on which a cooking device, e.g. a wok, is positioned. A lower induction coil of the adapter is arranged in proximity of the lower side for inductive coupling to a cooktop-induction coil, and an upper induction coil is connected to the lower induction coil for producing induced current in the cooking device. The upper induction coil and the lower induction coil are of different forms in order to adapt to the form and/or size of the cooking device.

The present invention provides an induction cooker half-bridge resonant inverter having an adaptor coil in order for heating ferromagnetic as well as non-ferromagnetic cookware as provided by the characterizing features defined in the Claims.

Primary object of the present invention is to provide an induction cooker half-bridge resonant inverter having an adaptor coil in order for heating ferromagnetic as well as non-ferromagnetic cookware.

The present invention proposes an induction heating cooker heating a ferromagnetic as well as non-ferromagnetic pan, having a half-bridge resonant inverter for converting DC voltage into high-frequency current. Said inverter having a capacitive element, an induction heating coil and a switching circuit having two switching devices switched on and off with a duty cycle of 50%.

The induction heating cooker have an adaptor coil magnetically coupled with the induction heating coil of the resonant converter. Said adaptor coil has first and second coils connected in parallel with each other as a closed loop. The second coil in the adaptor coil is magnetically coupled with the cooking container or pan.

The capacitive element has first and second resonant capacitors in the form of parallel pairs with each capacitor in a pair being connected in series. The second resonant capacitors can selectively be connected to the induction heating coil in addition to the first resonant capacitors, by closing a relay contact. The capacitance value of the capacitive element is smaller when said contact relay is open. In this case, the capacitance value of the capacitive element is set according to a driving frequency or switching frequency of approximately 60 kHz. In the opposite case, that is, when the contact relay is closed, the capacitance value of the capacitive element is set according to a driving frequency of approximately 25 kHz.

The first and second coils of the adaptor coil are electromagnetically isolated from each other by an electromagnetic shield layer in the form of a ferrite layer disposed in between the two. The first coil in the adaptor coil has a number of turns equal to the number of turns in the induction heating coil and the number of turns of said second coil is greater than that of the first coil. The adaptor coil comprises a thermal cut-out means, which can be a self-operating element or an element controlled by an adaptor coil control circuit in electrical coupling therewith. Said adaptor coil comprises an RF communication module providing real-time control feedback to a microcontroller. The RF communication module is in electrical communication with said adaptor coil control circuit.

Accompanying drawings are given solely for the purpose of exemplifying an induction cooker half-bridge resonant inverter having an adaptor coil, whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

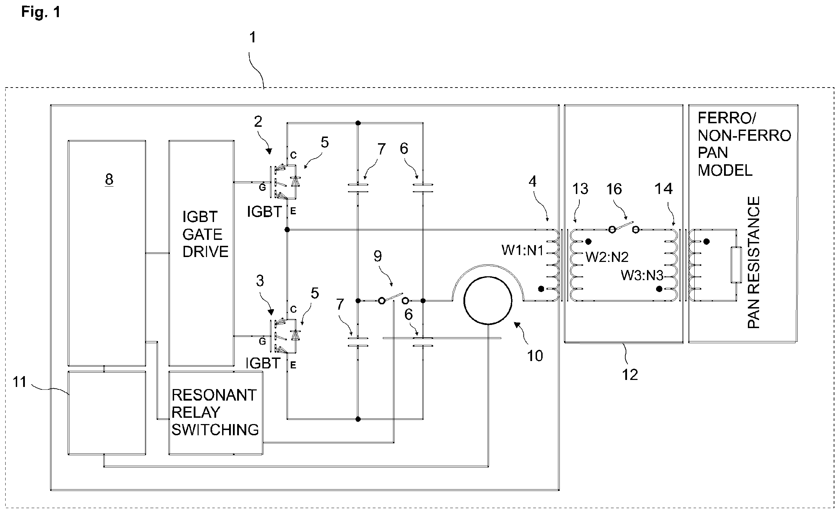

Fig. 1 demonstrates a schematic diagram for a principle circuit diagram of the half-bridge resonant converter according to a first embodiment of the present invention.
Fig. 2 demonstrates a schematic diagram for a principle circuit diagram of the half-bridge resonant converter according to a second embodiment of the present invention.
Fig. 3 demonstrates a cross-sectional representation of the adaptor coil together with the induction heating coil according to the present invention.

The following numerals are used in the detailed description:
1. Induction heating cooker
2. First switching device
3. Second switching device
4. Induction heating coil
5. Freewheeling diode
6. First resonant capacitors
7. Second resonant capacitors
8. Microcontroller
9. Relay contact
10. Current transformer
11. Pan detection circuit
12. Adaptor coil
13. First coil
14. Second coil
15. Adaptor coil ferrite layer
16. Thermal cut-out means
17. Adaptor coil control circuit
18. RF communication module

The present invention proposes an induction heating cooker (1) by which heat is induced within a magnetically responsive or non-responsive cooking container.

The present invention proposes an induction heating cooker (1) typically having a plurality of individual burners with induction heating coils (4). A half-bridge resonant converter by which heat energy is induced within a magnetically responsive cooking container in this respect is proposed, as will be delineated hereinafter.

The induction heating cooker (1) of the present invention is supplied with a source of AC voltage. A rectifier (not shown) is connected between the AC source and filter elements of the half-bridge resonant converter. The filter elements typically include a leveling capacitor serving to the purpose of filtering high frequency current and a filter inductance at the output of the rectifier.

Said induction heating coil (4) is conventionally magnetically coupled with a cooking vessel or pan heated by electromagnetic induction where eddy currents are induced so that resistance provides heat dissipation. First and second switching devices (2, 3) are connected to both ends of the levelling capacitor in the form of upper and lower arms connected in series. They are conventionally connected in parallel with anti-parallel diodes, i.e. freewheeling diodes (5).

The half-bridge resonant converter constitutes a switching circuit typically having two switching devices (2, 3) for effecting connection of the switching voltage to said induction heating coil (4). A first end of the induction heating coil (4) is connected to an output terminal of the switching devices (2, 3).

The half-bridge resonant converter further comprises a capacitive element having four capacitive sub-elements. A relay contact (9) is connected in series between the second end of the induction heating coil (4) and the middle point of two resonant capacitors in series between the negative and positive terminals of the DC source. The relay contact (9), when closed, connects said two resonant capacitors, designated as second resonant capacitors (7), to the induction heating coil (4). First resonant capacitors (6) are also connected in series between said negative and positive terminals. Due to the fact that each of said first and second resonant capacitors (6, 7) have capacitors being split, current stress in each capacitor is reduced.

The switching devices (2, 3) are insulated gate bipolar transistors (IGBT), which are alternately on and off. Said power circuit further comprises a microcontroller (8) regulating the operation of said switching devices (2, 3) by triggering respective gate drive circuits, whereby the switching devices (2, 3) are driven on and off in phase opposition symmetrically.

During operation of the induction heating cooker (1), the microcontroller (8) detects the equivalent inductance being placed on the induction heating coil (4) by means of a current transformer (10), the output from said current transformer (10) being applied to a ferromagnetic or non-ferromagnetic pan detection circuit (11). The ferromagnetic or non-ferromagnetic pan detection circuit (11) conventionally determines the skin resistance of the pan in relationship to the value of the current through the current transformer (10). The current in the current transformer (10) is typically small if a ferromagnetic vessel having a high skin resistance is detected.

In case a non-ferromagnetic vessel is detected, the relay contact (9) according to the invention is opened to disconnect the additional second resonant capacitors (7) from the induction heating coil (4). Due to the fact that the skin resistance of a cooking pan is directly proportional to the square root of the frequency, the latter is increased by way of opening the relay contact (9), such that a capacitance value for the capacitive element, as disconnected from the second resonant capacitors (7), being set to the level allowing a corresponding frequency, is used. Therefore, in connection with the detected material of the cooking pan or due the selected power setting, the relay contact (9) is switched on and off.

In the closed position of said relay contact, that is, if a ferromagnetic vessel is detected, the second resonant capacitors (7) are connected to the induction heating coil (4) in addition to said first resonant capacitors (6) so that the capacitive element has a capacitance value in relationship to a lower resonant frequency.

The capacitance value of the capacitive element while the second resonant capacitors (7) are disconnected from the induction heating coil (4) is smaller than the capacitance value of the capacitive element together with the second resonant capacitors (7).

According to the present invention, the capacitance value of the capacitive element while the second resonant capacitors (7) are disconnected from the induction heating coil (4) can be set according to the driving frequency of approximately 60 kHz. Likewise, the capacitance value of the capacitive element together with the second resonant capacitors (7) can be set according to the driving frequency of approximately 25 kHz.

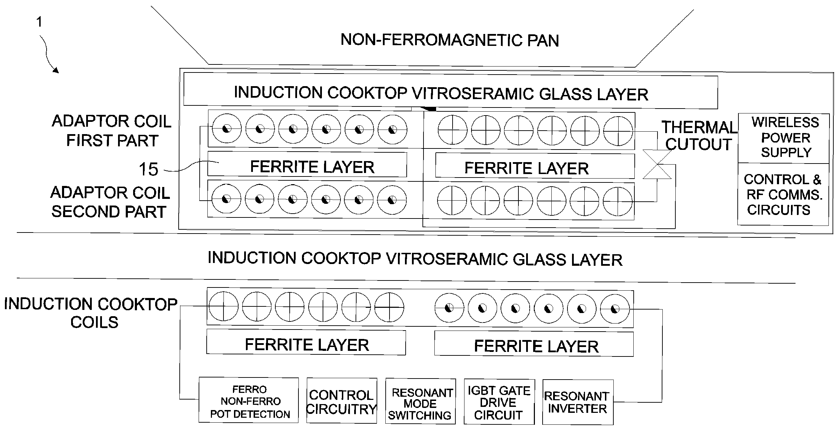

According to the present invention, the half-bridge resonant converter's induction heating coil (4) is magnetically coupled with an adaptor coil (12) having impedance matching function in order to ensure efficient power transfer between the high-frequency source and the cooking vessel. Said adaptor coil (12) has first and second coils (13, 14) with each coil (13, 14) having first and second opposite ends and with respective first and second ends being directly connected to each other to form a closed loop. Said first and second coils (13, 14) are electromagnetically isolated from each other by an electromagnetic shield layer in the form of a ferrite layer disposed in between as seen in Fig. 3.

In an embodiment, the first coil (13) having a number of turns that is equal to the number of turns of the induction heating coil (4), the same voltage is induced in the first coil (13) by the magnetic field produced by the induction heating coil (4), which will in turn be induced in the second coil (14) as well. In view of the fact that the skin resistance is increased by raising the frequency, the input impedance can be increased by increasing the number of turns N and/or raising the frequency. Therefore, the number of turns of the second coil (14) of the adaptor coil (12) is designed to be greater than that of the first coil (13).

In another embodiment, the first coil (13) having a number of turns that is different from the number of turns of the induction heating coil (4), thus the different voltage is induced in the first coil (13) from the magnetic field produced by the induction heating coil (4),

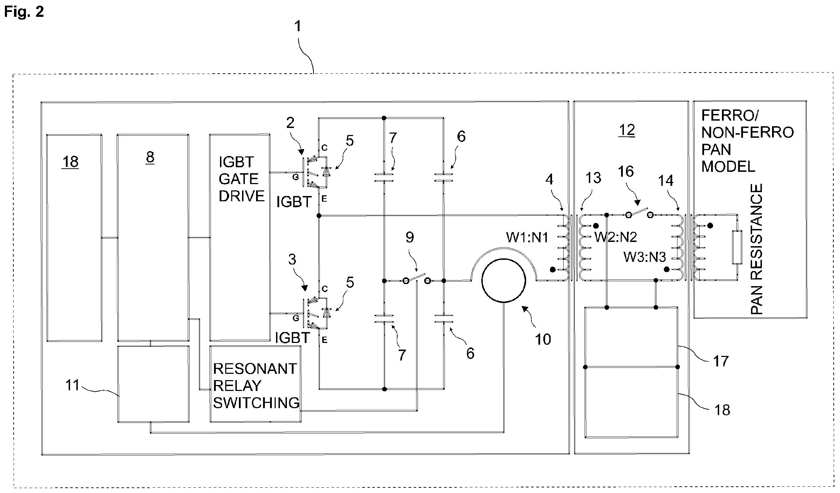

According to the present invention, the adaptor coil (12) comprises a thermal cut-out means (16), optionally in the manner to have a pair of resilient metal strips, monitors the temperature of the adaptor coil (12) in series connection between the first and second coils (13, 14). Alternatively, as demonstrated in Fig. 2, said thermal cut-out means (16) can be controlled by an adaptor coil control circuit (17) in electrical coupling therewith, said adaptor coil control circuit (17) being supplied by the voltage induced across the adaptor coil (12).

Further, the adaptor coil control circuit (17) can comprise an RF communication module (18) that provides real-time feedback of voltage, current and temperature to the microcontroller (8) to ensure that the operation of the induction heating cooker (1) is under optimal conditions.

In a nutshell, the present invention proposes an induction heating cooker (1) for heating a magnetically responsive or non-responsive cooking container, the induction heating cooker (1) having an electric power converter comprising an inverter for converting voltage applied from a DC power source into high-frequency current, the inverter having a capacitive element, an induction heating coil (4) and a switching circuit having a first and a second switching devices (2, 3) for effecting connection of the switching voltage to the induction heating coil (4).

The induction heating cooker (1) comprises an adaptor coil (12) magnetically coupled with the induction heating coil (4). The adaptor coil (12) has first and second coils (13, 14), each coil (13, 14) having first and second opposite ends and the respective first and second ends being directly connected to each other to form a closed loop. The second coil (14) of the adaptor coil (12) is magnetically coupled with the cooking container.

In a further embodiment of the invention, the inverter is a half-bridge resonant inverter. In a still further embodiment of the invention, the capacitive element has first and second resonant capacitors (6, 7), the second resonant capacitors (7) being connectable to the induction heating coil (4) by means of a relay contact (9) in addition to the first resonant capacitors (6).

In a yet still further embodiment of the invention, the relay contact (9) is openable to disconnect the second resonant capacitors (7) from the induction heating coil (4). The capacitance value of the capacitive element while the second resonant capacitors (7) are disconnected from the induction heating coil (4) is smaller than the capacitance value of the capacitive element together with the second resonant capacitors (7).

In a yet still further embodiment of the invention, the capacitance value of the capacitive element while the second resonant capacitors (7) are disconnected from the induction heating coil (4) is set according to a driving frequency of approximately 60 kHz. The capacitance value of the capacitive element together with the second resonant capacitors (7) is set according to a driving frequency of approximately 25 kHz.

In a yet still further embodiment of the invention, the first and second coils (13, 14) of the adaptor coil (12) are electromagnetically isolated from each other by an electromagnetic shield layer. Said electromagnetic shield layer is a ferrite layer disposed in between the first and second coils (13, 14) of the adaptor coil (12).

In a yet still further embodiment of the invention, the first coil (13) has a number of turns that is equal to the number of turns of the induction heating coil (4). The number of turns of the second coil (14) of the adaptor coil (12) is designed to be greater than that of the first coil (13).

In a yet still further embodiment of the invention, the adaptor coil (12) comprises a thermal cut-out means (16). Said thermal cut-out means (16) is controlled by an adaptor coil control circuit (17) in electrical coupling therewith.

In a yet still further embodiment of the invention, the adaptor coil control circuit (17) is supplied by the voltage induced across the adaptor coil (12).

In a yet still further embodiment of the invention, the adaptor coil (12) comprises an RF communication module (18) providing real-time voltage, current and temperature feedback to a microcontroller (8) of the induction heating cooker (1).

The present invention therefore provides an induction cooking system capable of heating ferromagnetic as well as non-ferromagnetic cookware. The adaptor coil (12) with impedance matching function ensures efficient power transfer between the high-frequency source and the cooking vessel.

## Claims

1. An induction heating cooker (1) for heating a magnetically responsive or non-responsive cooking container, said induction heating cooker (1) having an electric power converter comprising an inverter for converting voltage applied from a DC power source into high-frequency current, said inverter having a capacitive element, an induction heating coil (4) and a switching circuit having a first and a second switching devices (2, 3) for effecting connection of the switching voltage to the induction heating coil (4),
wherein
- the induction heating cooker (1) comprises an adaptor coil (12) magnetically coupled with the induction heating coil (4),
- the adaptor coil (12) has first and second coils (13, 14), each coil (13, 14) having first and second opposite ends and said respective first and second ends being directly connected to each other to form a closed loop,
- the second coil (14) of said adaptor coil (12) is magnetically coupled with the cooking container,
- the number of turns of the second coil (14) of the adaptor coil (12) is designed to be greater than that of the first coil (13).

2. An induction heating cooker (1) as in Claim 1, **characterized in that** said inverter is a half-bridge resonant inverter.

3. An induction heating cooker (1) as in Claim 1 or 2, **characterized in that** said capacitive element has first and second resonant capacitors (6, 7), the second resonant capacitors (7) being connectable to the induction heating coil (4) by means of a relay contact (9) in addition to the first resonant capacitors (6).

4. An induction heating cooker (1) as in Claim 3, **characterized in that** said relay contact (9) is openable to disconnect the second resonant capacitors (7) from the induction heating coil (4).

5. An induction heating cooker (1) as in Claim 3 or 4, **characterized in that** capacitance value of the capacitive element while the second resonant capacitors (7) are disconnected from the induction heating coil (4) is smaller than the capacitance value of the capacitive element together with the second resonant capacitors (7).

6. An induction heating cooker (1) as in Claim 5, **characterized in that** the capacitance value of the capacitive element while the second resonant capacitors (7) are disconnected from the induction heating coil (4) is set according to a driving frequency of approximately 60 kHz.

7. An induction heating cooker (1) as in Claim 1, **characterized in that** said first and second coils (13, 14) of the adaptor coil (12) are electromagnetically isolated from each other by an electromagnetic shield layer.

8. An induction heating cooker (1) as in Claim 7, **characterized in that** said electromagnetic shield layer is a ferrite layer disposed in between the first and second coils (13, 14) of the adaptor coil (12).

9. An induction heating cooker (1) as in Claim 1, 7 or 8, **characterized in that** the first coil (13) has a number of turns that is equal to the number of turns of the induction heating coil (4).

10. An induction heating cooker (1) as in Claim 1, 7 or 8, **characterized in that** the first coil (13) has a number of turns that is different from the number of turns of the induction heating coil (4).

11. An induction heating cooker (1) as in any of the preceding Claims, **characterized in that** the adaptor coil (12) comprises a thermal cut-out means (16).

12. An induction heating cooker (1) as in Claim 11, **characterized in that** the thermal cut-out means (16) is controlled by an adaptor coil control circuit (17) in electrical coupling therewith.

13. An induction heating cooker (1) as in Claim 12, **characterized in that** said adaptor coil control circuit (17) is supplied by the voltage induced across the adaptor coil (12).

14. An induction heating cooker (1) as in Claim 1 or 12, **characterized in that** the adaptor coil (12) comprises an RF communication module (18) providing real-time voltage, current and temperature feedback to a microcontroller (8) of the induction heating cooker (1).

## Patentansprüche

1. Ein Induktionsherd (1) zum Erwärmen eines magnetisch ansprechenden oder nicht ansprechenden Kochbehälters, wobei der Induktionsherd (1) einen elektrischen Leistungswandler aufweist, der einen Wechselrichter zum Umwandeln der von einer Gleichstromquelle angelegten Spannung in einen Hochfrequenzstrom aufweist, wobei der Wechselrichter ein kapazitives Element, eine Induktionsheizspule (4) und einen Schaltkreis mit einer ersten und einer zweiten Schalteinrichtung (2, 3) zum Anlegen der Schaltspannung an die Induktionsheizspule (4) aufweist,
worin
- der Induktionskocher (1) umfasst eine mit der Induktionsheizspule (4) magnetisch gekoppelte Adapterspule (12),
- die Adapterspule (12) weist eine erste und zweite Spule (13, 14) auf, wobei jede der Spule (13, 14) erste und zweite gegenüberliegende Enden besitzt und diese Enden direkt miteinander verbunden sind, damit eine geschlossene Schleife gebildet wird,
- die zweite Spule (14) der Adapterspule (12) ist magnetisch mit dem Kochbehälter gekoppelt,
- die Windungszahl der zweiten Spule (14) der Adapterspule (12) ist größer ausgelegt als die der ersten Spule (13).

2. Ein Induktionsherd (1), wie in Anspruch 1 aufgeführt, **ist dadurch gekennzeichnet, dass** der Wechselrichter ein Halbbrückenresonanzwechselrichter ist.

3. Ein Induktionsherd (1), wie in Anspruch 1 oder 2 aufgeführt, **ist dadurch gekennzeichnet, dass** das kapazitive Element eine erste und zweite Resonanzkondensator (6, 7) aufweist, wobei die zweiten Resonanzkondensatoren (7) zusätzlich zu den ersten Resonanzkondensatoren (6) über einen Relaiskontakt (9) mit der Induktionsheizspule (4) verbindbar sind.

4. Ein Induktionsherd (1), wie in Anspruch 3 aufgeführt, **ist dadurch gekennzeichnet, dass** der Relaiskontakt (9) geöffnet werden kann, damit die zweiten Resonanzkondensatoren (7) von der Induktionsheizspule (4) getrennt werden.

5. Ein Induktionsherd (1), wie in Anspruch 3 oder 4 aufgeführt, **ist dadurch gekennzeichnet, dass** der Kapazitätswert des kapazitiven Elements, während die zweiten Resonanzkondensatoren (7) von der Induktionsheizspule (4) getrennt sind, kleiner als der Kapazitätswert des kapazitiven Elements zusammen mit den zweiten Resonanzkondensatoren (7) ist.

6. Ein Induktionsherd (1), wie in Anspruch 5 aufgeführt, **ist dadurch gekennzeichnet, dass** der Kapazitätswert des kapazitiven Elements, während die zweiten Resonanzkondensatoren (7) von der Induktionsheizspule (4) getrennt ist und gemäß einer Ansteuerfrequenz von ungefähr 60 kHz eingestellt wird.

7. Ein Induktionsherd (1), wie in Anspruch 1 aufgeführt, **ist dadurch gekennzeichnet, dass** die erste und die zweite Spule (13, 14) der Adapterspule (12) durch eine elektromagnetische Abschirmschicht elektromagnetisch voneinander isoliert sind.

8. Ein Induktionsherd (1), wie in Anspruch 7 aufgeführt, **ist dadurch gekennzeichnet, dass** die elektromagnetische Abschirmschicht eine Ferritschicht ist und zwischen der ersten und der zweiten Spule (13, 14) der Adapterspule (12) angeordnet ist.

9. Ein Induktionsherd (1), wie in Anspruch 1, 7 oder 8 aufgeführt, **ist dadurch gekennzeichnet, dass** die erste Spule (13) eine Windungszahl besitzt, die gleich der Windungszahl der Induktionsheizspule (4) ist.

10. Ein Induktionsherd (1), wie in Anspruch 1, 7 oder 8 aufgeführt, **ist dadurch gekennzeichnet, dass** die erste Spule (13) eine Anzahl von Windungen aufweist, die sich von der Anzahl von Windungen der Induktionsheizspule (4) unterscheidet.

11. Ein Induktionsherd (1), wie in einem der vorherigen Ansprüchen aufgeführt, **ist dadurch gekennzeichnet, dass** die Adapterspule (12) eine thermische Abschalteinrichtung (16) aufweist.

12. Ein Induktionsherd (1), wie in Anspruch 11 aufgeführt, **ist dadurch gekennzeichnet, dass** die Abschalteinrichtung (16) von einer mit ihr elektrisch gekoppelten Adapterspulen-Steuerschaltung (17) gesteuert wird.

13. Ein Induktionsherd (1), wie in Anspruch 12 aufgeführt, **ist dadurch gekennzeichnet, dass** die Adapterspulen-Steuerschaltung (17) durch die über die Adapterspule (12) induzierte Spannung versorgt wird.

14. Ein Induktionsherd (1), wie in Anspruch 1 oder 12 aufgeführt, **ist dadurch gekennzeichnet, dass** die Adapterspule (12) ein HF-Kommunikationsmodul (18) umfasst, das eine Echtzeit-Spannungs-, Strom- und Temperaturrückmeldung an einen Mikrocontroller (8) des Induktionsherdes (1) liefert.

## Revendications

1. Un appareil de cuisson à chauffage par induction (1) pour chauffer un récipient de cuisson magnétiquement réactif ou non réactif, ledit appareil de cuisson à chauffage par induction (1) comporte un convertisseur de puissance électrique ayant un onduleur pour convertir la tension appliquée par une source d'alimentation CC en un courant haute fréquence, ledit onduleur ayant un élément capacitif, une bobine de chauffage par induction (4) et un circuit de commutation comprenant un premier et un second dispositif de commutation (2, 3) pour effectuer la connexion de la tension de commutation avec la bobine de chauffage par induction (4),
dans lequel
- l'appareil de cuisson à chauffage par induction (1) comprend une bobine d'adaptateur (12) magnétiquement couplée à la bobine de chauffage par induction (4),
- la bobine d'adaptateur (12) comporte une première et une seconde bobine (13, 14), chaque bobine (13, 14) comprenant une première et une seconde extrémité opposée et lesdites première et seconde extrémités respectives étant directement connectées l'une à l'autre afin de former un circuit fermé,
- la seconde bobine (14) de ladite bobine d'adaptateur (12) est magnétiquement couplée au récipient de cuisson,
- le nombre de tours de la seconde bobine (14) de la bobine d'adaptateur (12) est conçu de façon à être supérieur à celui de la première bobine (13).

2. Un appareil de cuisson à chauffage par induction (1) selon la Revendication 1, **caractérisé en ce que** ledit onduleur est un onduleur résonant en demi-pont.

3. Un appareil de cuisson à chauffage par induction (1) selon la Revendication 1 ou 2, **caractérisé en ce que** ledit élément capacitif comporte des premiers et seconds condensateurs résonants (6, 7), les seconds condensateurs résonants (7) pouvant être connectés à la bobine de chauffage par induction au moyen de contact à relais (9) en plus des premiers condensateurs résonants (6).

4. Un appareil de cuisson à chauffage par induction (1) selon la Revendication 3, **caractérisé en ce que** ledit contact de relais (9) peut être ouvert pour déconnecter les seconds condensateurs résonants (7) de la bobine de chauffage par induction (4).

5. Un appareil de cuisson à chauffage par induction (1) selon la Revendication 3 ou 4, **caractérisé en ce que** la valeur de capacité de l'élément capacitif lorsque les seconds condensateurs résonants (7) sont déconnectés de la bobine de chauffage par induction (4) est inférieure à la valeur de capacité de l'élément capacitif ensemble avec les seconds condensateurs résonants (7).

6. Un appareil de cuisson à chauffage par induction (1) selon la Revendication 5, **caractérisé en ce que** la valeur de capacité de l'élément capacitif lorsque les seconds condensateurs résonants (7) sont déconnectés de la bobine de chauffage par induction (4) est réglée de manière conforme à une fréquence d'entraînement d'environ 60 kHz.

7. Un appareil de cuisson à chauffage par induction (1) selon la Revendication 1, **caractérisé en ce que** lesdites première et seconde bobines (13, 14) de la bobine d'adaptateur (12) sont isolées électro-magnétiquement l'une de l'autre par une couche d'isolation électromagnétique.

8. Un appareil de cuisson à chauffage par induction (1) selon la Revendication 7, **caractérisé en ce que** ladite couche d'isolation électromagnétique est une couche de ferrite disposée entre la première et la seconde bobine (13, 14) de la bobine d'adaptateur (12).

9. Un appareil de cuisson à chauffage par induction (1) selon la Revendication 1, 7 ou 8, **caractérisé en ce que** la première bobine (13) comporte un nombre de tours qui est égal au nombre de tours de la bobine de chauffage par induction (4).

10. Un appareil de cuisson à chauffage par induction (1) selon la Revendication 1, 7 ou 8, **caractérisé en ce que** la première bobine (13) comporte un nombre de tours qui est différent du nombre de tours de la bobine de chauffage par induction (4).

11. Un appareil de cuisson à chauffage par induction (1) selon l'une quelconque des revendications précédentes, **caractérisé en ce que** la bobine d'adaptateur (12) comprend un moyen de protection thermique (16).

12. Un appareil de cuisson à chauffage par induction (1) selon la Revendication 11, **caractérisé en ce que** le moyen de protection thermique (16) est contrôlé par un circuit de commande de la bobine d'adaptateur (17) en couplage électrique avec celui-ci.

13. Un appareil de cuisson à chauffage par induction (1) selon la Revendication 12, **caractérisé en ce que** ledit circuit de commande de la bobine d'adaptateur (17) est alimenté par la tension induite à travers la bobine d'adaptateur (12).

14. Un appareil de cuisson à chauffage par induction (1) selon la Revendication 1 ou 12, **caractérisé en ce que** la bobine d'adaptateur (12) comprend un module de communication RF (18) qui fournit un feedback en temps réel de la tension, du courant et de la température à un microcontrôleur (8) de l'appareil de cuisson à chauffage par induction (1).
